Europäisches Patentamt

European Patent Office

Office européen des brevets

(11) Publication number: **0 140 411**
**A1**

## (12) EUROPEAN PATENT APPLICATION

(21) Application number: **84201303.9**

(22) Date of filing: **11.09.84**

(51) Int. Cl.⁴: **G 06 K 7/10**
**G 11 B 7/13**

(30) Priority: **14.09.83 NL 8303168**

(43) Date of publication of application:
**08.05.85 Bulletin 85/19**

(84) Designated Contracting States:
**AT BE CH DE FR GB IT LI SE**

(71) Applicant: **N.V. Philips' Gloeilampenfabrieken**
**Groenewoudseweg 1**
**NL-5621 BA Eindhoven(NL)**

(72) Inventor: **van Ruyven, Lodewijk Johan**
**c/o INT. OCTROOIBUREAU B.V. Prof. Holstlaan 6**
**NL-5656 AA Eindhoven(NL)**

(74) Representative: **Strijland, Wilfred et al,**
**INTERNATIONAAL OCTROOIBUREAU B.V. Prof.**
**Holstlaan 6**
**NL-5656 AA Eindhoven(NL)**

(54) **Bar code reading device.**

(57) The bar code reading device comprises a semiconductor laser diode, a first end face of which is optically coupled to an end of an optical fibre, a second end face being optically coupled to a detector. The bar code information is presented to the other end of the optical fibre. This information is read by the semiconductor laser diode by way of optical feedback.

FIG.1

EP 0 140 411 A1

PHN.10.779 1 **0140411**
27.7.1984

"Bar code reading device"

The invention relates to a bar code reading device, comprising a semiconductor laser diode, a first end face of which is optically coupled to an end of a section of an optical waveguide in order to read, using optical waves, the bar code information provided on an object, said device also comprising a detector for detecting the optical wave reflected by the bar code information.

A device of this kind is known from US 4,286,145. The light produced by the semiconductor laser diode is coupled into an optical waveguide. The light produced is used to read the bar code information provided on a surface of an object, for example a sales item. During reading, the light is either reflected or not, depending on the pattern of the bar code information. The reflected light is coupled into the optical wave guide and thus reaches the detector after separation by a directional coupler. The detector detects the content of the bar code information from the reflected light and converts this information into a binary electrical signal which is presented to a data processing system.

Devices of this kind are usually used in sales outlets. This is because most sales items are provided with a UPC (Universal Product Code) bar code, enabling operations such as payment at the cashier, stock-keeping etc. to be more efficiently performed.

It is a drawback of the known device, however, that use is made of a directional coupler for separating the transmitted wave and the reflected wave. Such a directional coupler is expensive and absorbs a part of the energy of the reflected light. Because only the reflected light contains the information read, this loss of energy itself means that the energy of the transmitted light wave must be adequate. For use in sales outlets, this has drawbacks in view of safety regulations to be satisfied.

It is an object of the invention to provide a bar code reading device in which said drawback is mitigated.

To this end, a bar code reading device in accordance with the invention is characterized in that a second end face of the semiconductor laser diode is optically coupled to the detector for
detection via optical feedback by the semiconductor laser diode and
the optical waveguide. Because the second end face of the semiconductor laser diode is optically coupled to the detector, detection
is possible via feedback. Consequently, a directional coupler is
no longer required and, moreover, because the fed back light increases the energy of the laser, the energy of the transmitted
light need not be so high. The total dissipated energy then remains
small, so that small power supply currents can be used for the
laser.

A device in accordance with the invention is preferably
characterized in that the semiconductor laser diode produces light
whose wavelength exceeds 1.3 /um. Light whose wavelength exceeds
1.3 /um is completely harmless to the human eye, because radiation
having this wavelength is absorbed by water.

Preferably, a device in accordance with the invention
utilizes an InGaAsP diode laser, because this laser produces light
having a wavelength of between 1.3 and 1.5 /um.

The invention will be described in detail hereinafter
with reference to the accompanying drawing wherein,

Fig. 1 shows an embodiment of a bar code reading device
in accordance with the invention;

Fig. 2 shows a luminous flux characteristic of a semiconductor laser diode.

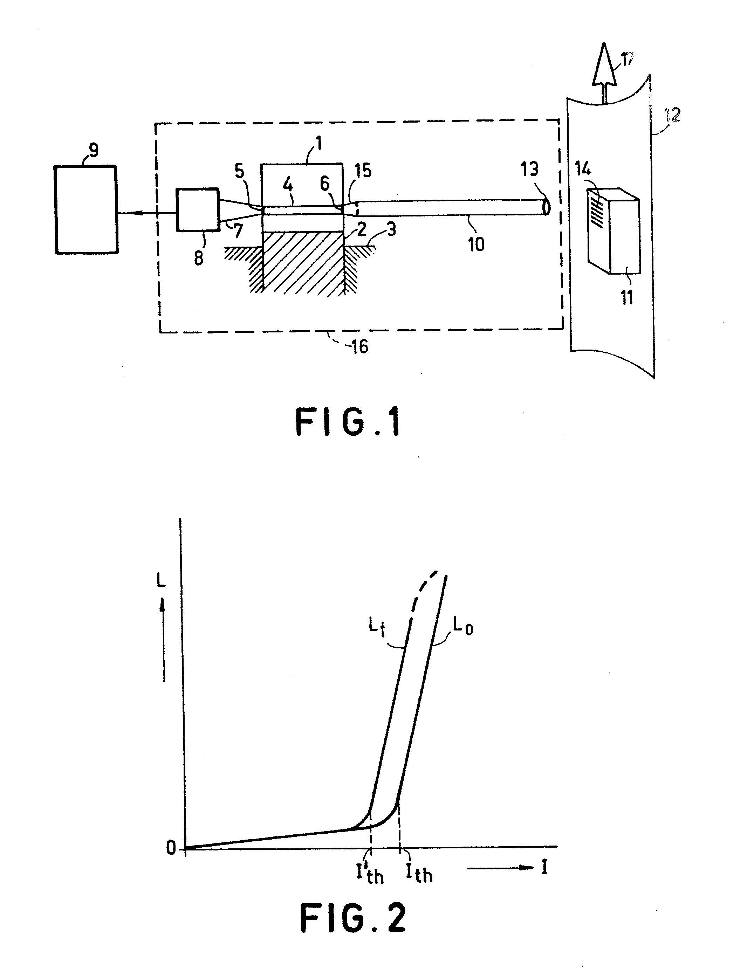

Fig. 1 shows an embodiment of a bar code reading device
in accordance with the invention. The device 16 comprises a semiconductor laser diode 1 which is mounted on a cooling block 2 which
is secured in a holder 3. The active layer 4 of the laser is
situated between the reflective end faces 5 and 6 which form the
laser resonator. The end faces 5 and 6 are partly transparent
mirrors which transmit a part of the incident light.

The light transmitted by the end face 5 is coupled to a
detector 8 via an optical coupling 7. The detector, for example a
photodetector which converts an optical signal into an electrical
signal, comprises an output which is connected to an input of a
data processing system 9 to be connected to the device 16.

Via an optical coupling 15, the end face 6 of the laser
is coupled to an end of a section of an optical fibre 10. This optical fibre and the laser form a rigid unit because, as will be described in detail hereinafter, detection takes place by optical feedback by the reading device. If this were not a rigid unit, movement of this optical coupling 15 would couple a signal into the laser which has not been reflected by the bar code information, thus causing an incorrect signal. The other end of the optical fibre is bounded by an optical element 13, preferably a lens. The latter, however, is merely a preferred embodiment, because instead of being bounded by an optical element the other end may also be formed by the boundary face of the end of the fibre.

A conveyer belt 12 carries an item 11 which is provided with bar code information 14 in the form of reflective strips. The conveyer belt moves in the direction indicated by the arrow 17. The side of the item 11 on which the bar code information is provided faces said other end of the optical fibre 10 or the optical element 13. Due to this arrangement, the bar code information is transported along the optical fibre 10 so that it can be read by the device 16.

Preferably, the optical element 13 is arranged so as to be substantially parallel to the surface of the item on which the bar code information is provided and the distance between the latter surface and the optical element is preferably small. The light transported by the optical fibre is then directed perpendicularly to said surface on which the bar code information is provided. This perpendicular orientation is important mainly when use is made of linear bar code information but is less important when an annular pattern is used for the bar code information. When a linear pattern is used, the optical element must not be directed perpendicular to the surface on which the bar code information is provided, because reading is then impossible.

Bar code information provided on an item which is transported past the device 16 on the conveyer belt is read by feedback. The light emitted by the laser 1 emerges _via_ the end face 6 in order to be coupled into the optical fibre. The light transported by the optical fibre is reflected by the bar pattern of the bar code information. The reflected light is detected by means of the laser itself. This is because the reflected light is imaged on the end face 6 of the laser. The semiconductor laser diode responds to variations of the light reflected by the bar code information by causing variations of the power emitted at the end face 5 of the laser, the latter variations being detected by the detector 8.

These variations, being caused by a feedback effect of the reflected light, cause a shift of the luminous flux characteristic of the laser. Such a characteristic is illustrated by Fig. 2 in which the power (L) of the emitted radiation is plotted as a function of the current (I) through the laser diode in the forward direction.

The graph Lo shows the L, I characteristic without feedback. When the current intensity exceeds a value $I_{th}$, referred to as the threshold current, a laser effect occurs. In the case of feedback, graph $L_t$, this threshold current is shifted to a lower value $I'_{th}$. For a given current intensity, more power is derived from the laser in the case of feedback than without feedback. It is not objectionable that the reflected light is incoherent with the light produced by the laser. This is because the reflected light has the correct wavelength because it is light originating from the laser which is reflected by the bar code information. Depending on the content of the bar code information, therefore, light will be coupled back into the laser or not, said fedback light causing an increased laser power for a given current intensity. The detector 8 detects this power increase and derives an electrical signal therefrom which is applied to the data processing system 9 in the form of binary information. The electrical signal thus presented is processed by the data processing system in a conventional manner.

It is important that the light can propagate in only one mode in the fibre 10, because otherwise phase fluctuations are liable to occur in the light reflected by the fibre 10 to the laser, which may cause additional noise in the optical output of the laser diode.

The laser, an InGaAsP diode laser, emits light having a wavelength in the range of from 1.3 to 1.5 /um. In a Point of Sales (POS) environment in which this device is used, light having such a wavelength is particularly attractive because it is not harmful to the human eye. This is because light having this wavelength is absorbed by water.

Because the optical fibre and the laser form one unit, the device 16 can be included in a closed system so that ambient light cannot interfere.

In an embodiment which differs from that described with reference to Fig. 1, the device 16 is completely or partly included in, for example a light pen. In that case it is no longer necessary to transport the item 11, because the light pen is moved across the bar code.

The detection on the basis of the power of the light produced by the laser for a given current intensity represents only one possibility of reading bar code information by means of a device in accordance with the invention. It is alternatively possible to use the noise induced in the laser by the reflected light for the detection. Because the bar code information is read by optical feedback into the laser, a light ray reflected by the bar code information will induce a given amount of noise in the laser. The bar code information read can be extracted by measurement of the amount of induced noise.

1.        A bar code reading device, comprising a semiconductor laser diode, a first end face of which is optically coupled to an end of a section of an optical waveguide in order to read, using optical waves, the bar code information provided on an object, said device also comprising a detector for detecting the optical wave reflected by the bar code information, characterized in that a second end face of the semiconductor laser diode is optically coupled to an entrance of the detector for detection via optical incoherent feedback by the semiconductor laser diode and the optical waveguide.

2.        A device as claimed in Claim 1, characterized in that the semiconductor laser diode produces light whose wavelength exceeds 1.3 μm.

3.        A device as claimed in Claim 1 or 2, characterized in that the semiconductor laser diode is an InGaAsP diode laser.

4.        A device as claimed in any one of the preceding Claims, characterized in that the device is incorporated in a cashier system of a sales outlet.

5.        A device as claimed in any one of the Claims 1, 2 or 3, characterized in that the device is completely or partly accommodated in a light pen.

0140411

FIG.1

FIG.2

PHN 10779

0140411

European Patent
Office

EUROPEAN SEARCH REPORT

Application number

EP 84 20 1303

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-3 941 945 (BORNER et al.) * figures 1,5; column 2, lines 55-61; column 3, lines 33-55; column 4, line 28 - column 5, line 15; column 6, line 62 - column 7, line 7; column 7, line 23 - column 8, line 6; column 9, line 62 - column 10, line 16 * | 1 | G 06 K 7/10<br>G 11 B 7/13 |
| | --- | | |
| Y,D | US-A-4 286 145 (PALMER) * whole document * | 1 | |
| A | | 4 | |
| | --- | | |
| A | GB-A-2 070 832 (SWARTZ et al.) * figures 12,14; page 2, lines 42-46; page 7, lines 47-52; page 8, lines 9-14; page 11, lines 54-62 * | 5 | TECHNICAL FIELDS SEARCHED (Int. Cl.4) |
| | --- | | G 06 K 7 |
| A | US-A-3 911 270 (TRAUB) * abstract * | 5 | G 11 B 7 |
| | --- | | |
| A | US-A-4 190 775 (SAKURAI et al.) * figures 4,6; page 2, line 34 - page 3, line 2; page 5, lines 5-29; page 6, lines 47-59 * | 1 | |
| | ---     -/- | | |

The present search report has been drawn up for all claims

| Place of search<br>THE HAGUE | Date of completion of the search<br>03-01-1985 | Examiner<br>FORLEN G.A. |
|---|---|---|

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| A | GB-A-2 016 744 (KLEUTERS et al.)<br>* figures 10-12; page 11, line 53 - page 12, line 89 * | 1 | |
| A | GB-A-1 584 664 (PHILIPS)<br>* figure 1; page 4, line 29 - page 5, line 24 * | 1 | |

TECHNICAL FIELDS SEARCHED (Int. Cl.4)

The present search report has been drawn up for all claims

| Place of search | Date of completion of the search | Examiner |
|---|---|---|
| THE HAGUE | 03-01-1985 | FORLEN G.A. |